# EUROPEAN PATENT SPECIFICATION

(11) **EP 3 456 415 B1**
(45) Date of publication and mention of the grant of the patent: **20.10.2021**
(21) Application number: 17190904.7
(22) Date of filing: 13.09.2017
(51) Int. Cl.: B01L 9/06, B67C 3/24

(54) **SAMPLE CONTAINER CARRIER, LABORATORY SAMPLE DISTRIBUTION SYSTEM AND LABORATORY AUTOMATION SYSTEM**
PROBENBEHÄLTERTRÄGER, LABORPROBENVERTEILUNGSSYSTEM UND LABORAUTOMATISIERUNGSSYSTEM
SUPPORT DE RÉCIPIENT D'ÉCHANTILLON, SYSTÈME DE DISTRIBUTION D'ÉCHANTILLONS DE LABORATOIRE ET SYSTÈME D'AUTOMATISATION DE LABORATOIRE

(43) Date of publication of application: 20.03.2019
(73) Proprietor: Roche Diagnostics GmbH, 68305 Mannheim (DE); F. Hoffmann-La Roche AG, 4070 Basel (CH)
(72) Inventor: DURCO, Rudolf, 71332 Waiblingen (DE); KAEPPELI, Marcel, 6343 Rolfkreuz (CH)
(74) Representative: Patentanwälte Ruff, Wilhelm, Beier, Dauster & Partner mbB

(56) References cited:
- WO-A1-96/36437
- WO-A1-2011/132037
- US-A- 5 244 082
- US-A1- 2005 037 502
- US-A1- 2010 015 007
- US-A1- 2014 202 829
- US-A1- 2015 233 956
- US-A1- 2015 233 957
- US-A1- 2017 131 310
- US-A1- 2017 153 262

## Description

### TECHNICAL FIELD AND PRIOR ART

The invention relates to a sample container carrier, a laboratory sample distribution system comprising such a sample container carrier and a laboratory automation system comprising such a laboratory sample distribution system.

Known laboratory sample distribution systems are typically used in laboratory automation systems in order to distribute laboratory samples contained in laboratory sample containers between different laboratory stations by means of sample container carriers. Such a sample container carrier, such a laboratory sample distribution system and such a laboratory automation system are shown in document US 2017/0131310 A1. The sample container carrier comprises spring arms for holding the laboratory sample container.

US 2010/0015007 A1 discloses a specimen container carrier for conveyor in laboratory automation system.

WO 96/36437 A1 discloses a vial holder.

US 2015/0233956 A1 discloses a transport device for transporting a sample container.

US 2005/0037502 A1 discloses a sample tube carrier for use in a sample handling system.

US 5,244,082 A discloses a container holder.

WO 2011/132037 A1 discloses a holder for generally cylindrical containers.

US 2014/0202829 A1 discloses a sample holder,

US 2017/0153262 A1 discloses a device for releasably holding an elongated object, such as a test tube, in a predetermined orientation.

US 2015/0233957 A1 discloses a transport device.

### SUMMARY OF THE INVENTION

It is the object of the invention to provide a sample container carrier having improved holding properties than sample container carriers of the prior art. It is a further object of the present invention to provide a laboratory sample distribution system comprising such a sample container carrier and a laboratory automation system comprising such a laboratory sample distribution system.

These objects are solved by a sample container carrier according to claim 1, a laboratory sample distribution system according to claim 11 and a laboratory automation system according to claim 13. Preferred embodiments are defined in the dependent claims.

### BRIEF DESCRIPTION OF THE DRAWINGS

In the following, an embodiment of the invention will be described in detail with reference to the drawings. Throughout the drawings, the same elements will be denoted by the same reference numerals.
- Fig. 1: shows a perspective view of a sample container carrier according to the invention,
- Fig. 2: shows a cross section view of the sample container carrier of Fig. 1,
- Fig. 3: shows another cross section view of the sample container carrier of Fig. 1,
- Fig. 4: shows a perspective view of a first holding element, a second holding element and a number of guiding elements of the sample container carrier of Fig. 1,
- Fig. 5: shows a perspective view of the first holding element, the second holding element, the number of guiding elements, a coupler and a retaining element of the sample container carrier of Fig. 1,
- Fig. 6: shows a cross section view of the first holding element, the second holding element and the coupler of the sample container carrier of Fig. 1,
- Fig. 7: shows a top view of the sample container carrier of Fig. 1,
- Fig. 8: shows a perspective view of a laboratory automation system according to the invention comprising the sample container carrier of Fig. 1 holding a laboratory sample container and
- Fig. 9: shows a schematic cross section view of the sample container carrier of Fig. 1 holding the laboratory sample container.

### DETAILED DESCRIPTION OF EMBODIMENTS OF THE INVENTION

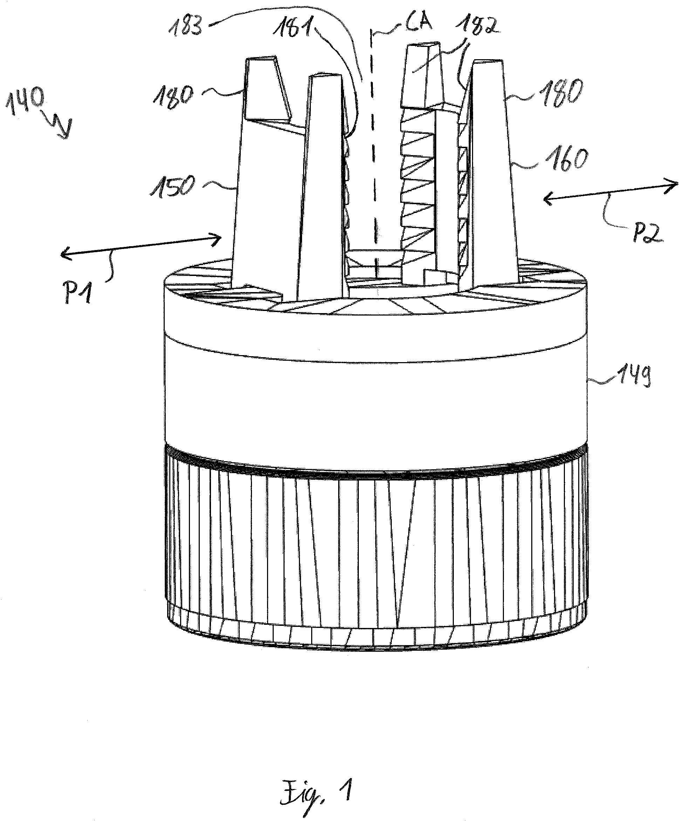

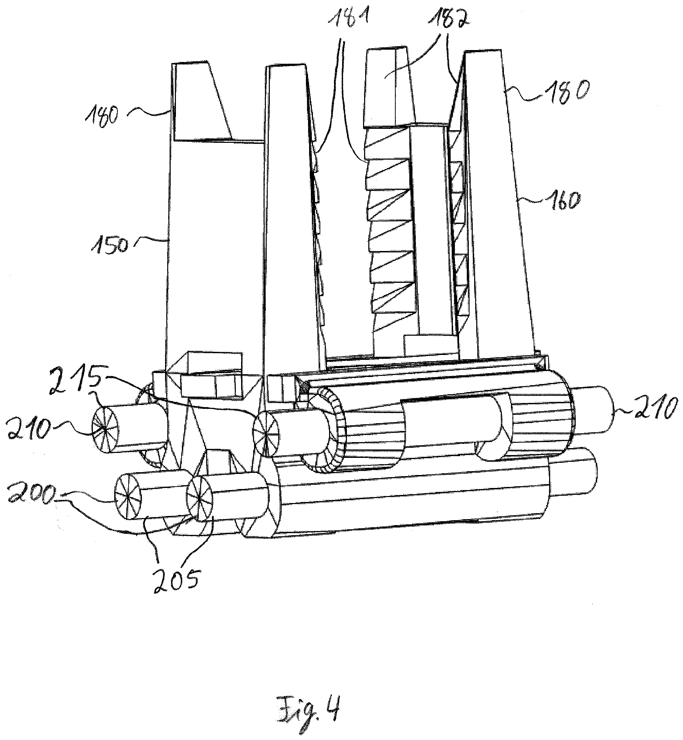

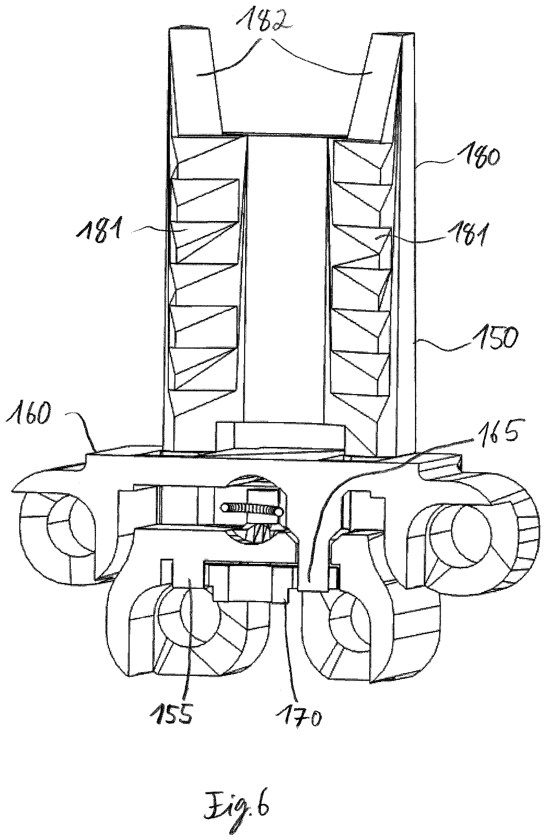

Fig. 1 to 9 show an inventive sample container carrier 140 for holding a laboratory sample container 130 and for transporting the held laboratory sample container 130 in a laboratory sample distribution system 100. The sample container carrier 140 comprises a first holding element 150, a second holding element 160 and a coupler 170. The first holding element 150 and the second holding element 160 are translationally displaceable towards and/or away from each other for holding the laboratory sample container 130. The coupler 170 is connected to the first holding element 150 and to the second holding element 160, such that the coupler 170 couples translational displacements of the first holding element 150 and the second holding element 160 with each other.

In alternative embodiments the sample container carrier may comprise a third holding element, or additionally a fourth holding element, or even more holding elements. All of the holding element/s may be translationally displaceable towards and/or away from each other for holding the laboratory sample container. The coupler may be connected to all of the holding elements, such that the coupler couples translational displacements of all of the holding elements with each other.

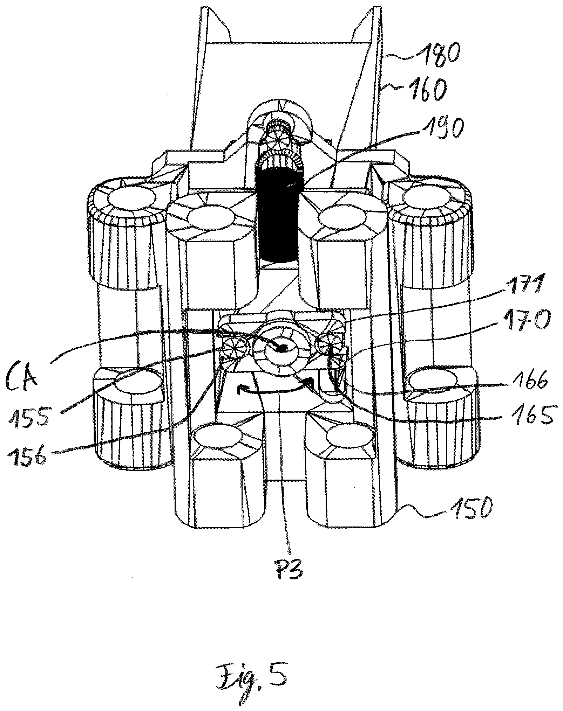

In detail the coupler 170 is a lever 171, as shown in Fig. 5. The lever 171 is connected to the first holding element 150 and to the second holding element 160. In the shown embodiment the lever 171 is mechanically connected by a positive connection. The positive connection is established between a protrusion 155 of the first holding element 150 and a corresponding lead 156 of the lever 171 and a protrusion 165 of the second holding element 160 and a corresponding lead 166 of the lever 171.

The coupler 170 is rotationally moveable, such that the coupler 170 couples by its rotational movement the translational displacements of the first holding element 150 and the second holding element 160 with each other.

In the shown embodiment a fulcrum of the lever 171 or the rotational movement, respectively, is arranged between an effort and a resistance of the lever 171. In alternative embodiments the effort of the lever may be arranged between the fulcrum and the resistance. Furthermore, in alternative embodiments the resistance of the lever may be arranged between the effort and the fulcrum.

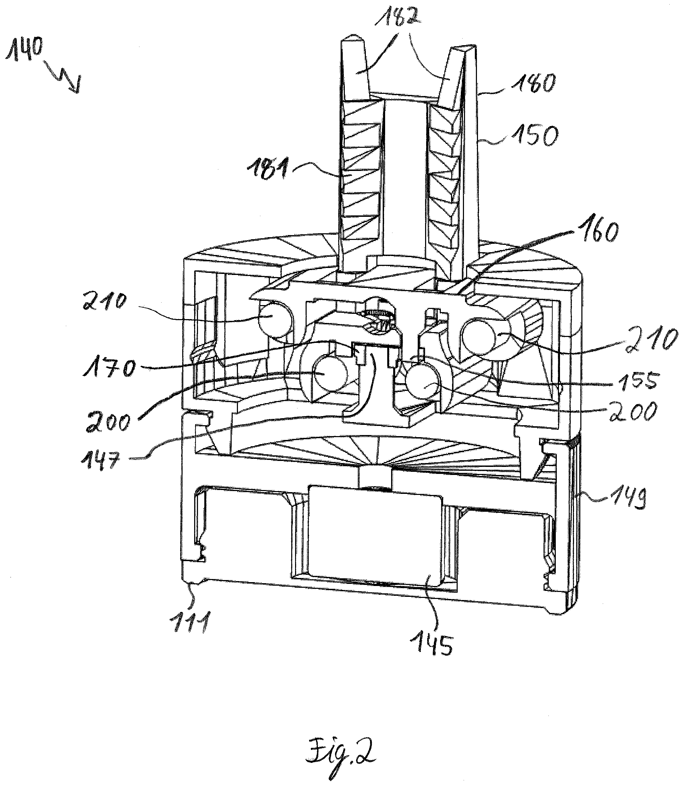

Furthermore, the sample container carrier 140 comprises a number of guiding elements 200, 210, as shown in Fig. 2 to 4. The number of guiding elements 200, 210 is adapted to guide the translational displacements of the first holding element 150 and the second holding element 160.

In detail the number of guiding elements 200, 210 comprises or is a number of rails 205, 215, in particular formed as circular cylindrical rods. The number of rails 205, 215 is adapted to guide the translational displacements of the first holding element 150 and the second holding element 160.

In the shown embodiment, the sample container carrier 140 comprises four guiding elements 200, 210, in particular two first guiding elements 200 and two second guiding elements 210. In alternative embodiments the sample container carrier may comprise one, two, three, five, six or more than six guiding elements.

The first holding element 150 is mounted translationally displaceable to or on the first guiding elements 200 and the rails 205, respectively. The second holding element 160 is mounted translationally displaceable to the second guiding elements 210 and the rails 215, respectively. In detail each holding element 150, 160 comprises four joints for mounting the holding element 150, 160 to the corresponding guiding element 200, 210. The joint encompasses the corresponding guiding element 200, 210. The holding elements 150, 160 slide along the guiding elements 200, 210, when the holding elements 150, 160 are translationally displaced.

In alternative embodiments additionally or alternatively the sample container carrier, in particular at least one of the holding elements, may comprise at least one wheel for enabling the translational displacement.

The guiding elements 200, 210, in particular the first guiding elements 200 and the second guiding elements 210, are arranged parallel to each other. In the shown embodiment the first guiding elements 200 and the second guiding elements 210 are placed at different vertical levels. Additionally, the coupler 170 is arranged between the guiding elements 200, 210.

Additionally, the first holding element 150 and the second holding element 160 are adapted to guide the translational displacement of each other, as shown in Fig. 2, 3, 6 and 7. In detail, the first holding element 150 and the second holding element 160 are telescoped. In alternative embodiments it may be sufficient, that the first holding element and the second holding element may be adapted to guide their translational displacements.

Besides, the sample container carrier 140 comprises a base body 149. The base body 149 is shaped, such that a central axis CA is a longitudinal axis of the base body 149. Furthermore, the coupler 170 and the number of guiding elements 200, 210 are arranged within the base body 149. In detail the base body 149 comprises a coupler-protrusion 147, as shown in Fig. 2. The coupler 170 is pivot-mounted to the coupler-protrusion 147, such that the central axis CA is a rotational axis of the coupler 170.

Moreover, the first holding element 150 and the second holding element 160 comprise a number of jaws for holding the laboratory sample container 130. In the shown embodiment each holding element 150, 160 comprises only one jaw 180. In alternative embodiments at least one of the holding elements may comprise two, three or more than three jaws.

In detail the jaws 180 are distributed around the central axis CA in an equidistant and equiangular manner. In the shown embodiment an angle between the two jaws 180 is 180 degrees.

Further, at least one of the number of jaws 180, in particular each jaw 180, comprises a corrugation 181 in form of a ribbing for holding the laboratory sample container 130.

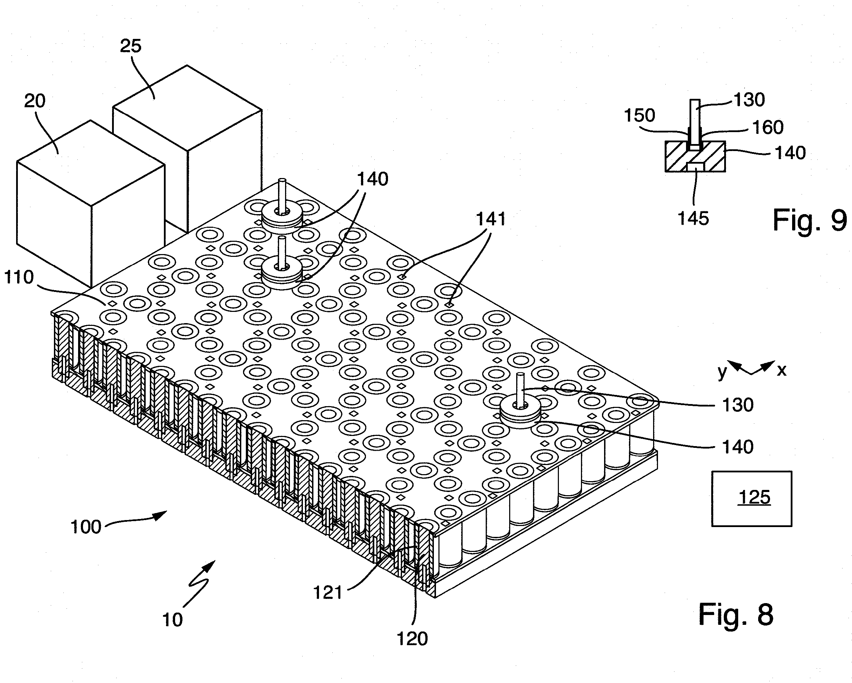

The jaws 180 and their corrugations 181, respectively, are adapted to be in direct contact with the laboratory sample container 130, as shown in Fig. 8 and 9. In particular the first holding element 150 and the second holding element 160 and their jaws 180, respectively, are arranged in a symmetric manner around the central axis CA of the sample container carrier 140, such that a point or line of contact of each of the first holding element 150 and the second holding element 160 with the laboratory sample container 130 is equidistant from the central axis CA. Each of the corrugations 181 is located at a corresponding line of contact.

Besides, the sample container carrier 140 comprises a support in form of the first holding element 150 and/or the second holding element 160, wherein the support is adapted to support the laboratory sample container 130. In other words: the first holding element 150 and/or the second holding element 160 limit an insertion depth of the laboratory sample container 130.

The first holding element 150 and the second holding element 160 and their jaws 180, respectively, define a holding region 183 for the laboratory sample container 130.

In the shown embodiment the laboratory sample container 130 is designed as a tube having an opening at an in Fig. 8 and 9 upper end. An end face of the laboratory sample container 130 is supported by the first holding element 150 and/or the second holding element 160. The jaws 180 hold or clamp the laboratory sample container 130 at its circumference. The opening of the laboratory sample container 130 is facing away from the sample container carrier 140.

The first holding element 150 and the second holding element 160 and their jaws 180, respectively, are adapted to hold the laboratory sample container 130, such that a longitudinal axis of the laboratory sample container 130 in form of the tube accords with the central axis CA.

Furthermore, a vertical length of the first holding element 150 and the second holding element 160 and their jaws 180, respectively is chosen, such that a part of the circumference of the laboratory sample container 130 is not covered by it/them. In other words: the part of the circumference is visible from the outside. In particular a value of the length is in the region of 10 millimeter (mm) to 40 mm, more in particular 15 mm. For example, the laboratory sample container 130 may comprise a not shown barcode at its circumference, which should be kept visible, when the laboratory sample container 130 is held by the sample container carrier 140.

Moreover, the first holding element 150 and the second holding element 160 and their jaws 180, respectively, each comprises an insertion support 182, as shown in Fig. 1. Each of the insertion supports 182 is adapted to cooperate together with the laboratory sample container 130 to be held, such that the holding element 150, 160 comprising the insertion support 182 is translationally displaced, when the laboratory sample container 130 is inserted into the sample container carrier 140. In the shown embodiment each insertion support 182 is embodied as an inclined plane. In detail each insertion support 182 is facing towards the central axis CA. An angle between the central axis CA and a respective insertion support 182 may be in the range of 5 degrees to 45 degrees.

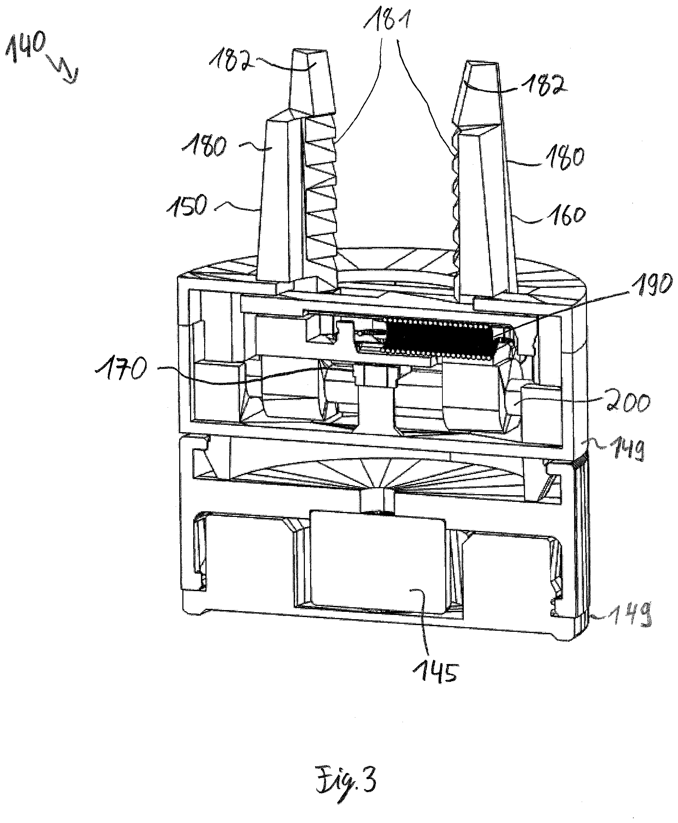

Further, the sample container carrier 140 comprises a retaining element 190 applying a force to the first holding element 150 and to the second holding element 160, such that the first holding element 150 and the second holding element 160 are force-loaded towards each other for holding the laboratory sample container 130, as shown in Fig. 3 and 5. In the shown embodiment the retaining element 190 is an elastic element in form of a spring. Furthermore, the retaining element 190 is mounted to the first holding element 150 and to the second holding element 160. In alternative embodiments additionally or alternatively the retaining element may be mounted to the coupler and/or to the base body. Moreover, in alternative embodiments the retaining element does not have to be mounted to the first holding element and/or to the second holding element.

Additionally the retaining element 190 applies a force, such that the first holding element 150 and the second holding element 160 are translationally displaced towards each other, in particular into a default position, when the laboratory sample container 130 is removed from the sample container carrier 140.

In detail in the default position the first holding element 150 and the second holding element 160 contact each other, such that a further translational displacement towards each other is blocked. Furthermore, in the default position a distance between the jaws 180 is smaller than a minimal diameter of the laboratory sample container 130 to be held. However, a distance between the upper ends of the insertion supports 182 is larger than a maximal diameter of the laboratory sample container 130 to be held.

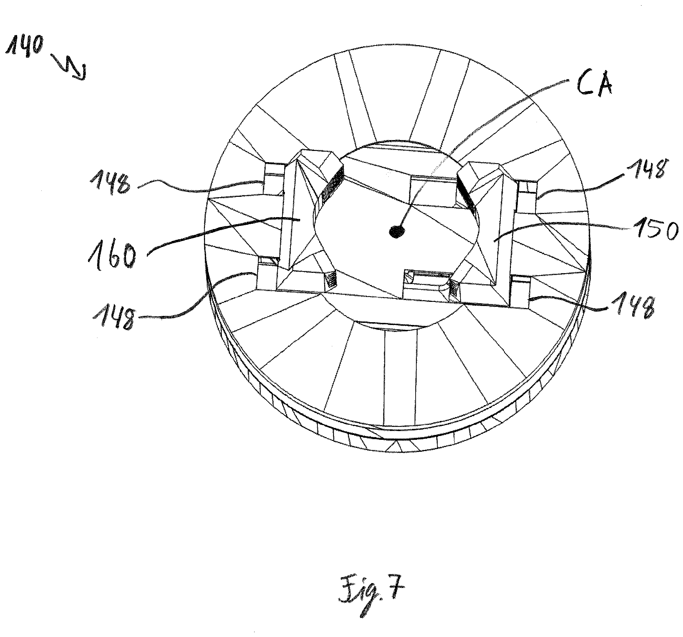

Furthermore, the base body 149 comprises four stops 148, as shown in Fig. 7. The stops 148 are adapted to limit the translational displacements of the first holding element 150 and the second holding element 160 and their jaws 180, respectively, when the first holding element 150 and the second holding element 160 are translationally displaced away from each other. The first holding element 150 and the second holding element 160 are partially arranged in the base body 149, such that the jaws 180 stick out from the base body 149.

When the laboratory sample container 130 is inserted into the sample container carrier 140, the laboratory sample container 130 contacts at least one of the insertion supports 182 and cooperates with it. Thereby, the corresponding holding element 150, 160 and via the coupler 170 the other holding element 160, 150 are translationally displaced away from each other in opposite translational directions out of the default position, as shown in Fig. 1 by arrows P1 and P2.

When the laboratory sample container 130 is present in the holding region 183 between the first holding element 150 and the second holding element 160 and their jaws 180, respectively, the retaining element 190 pushes and/or pulls the first holding element 150 and the second holding element 160 against the laboratory sample container 130. The coupler 170 ensures that the first holding element 150 and the second holding element 160 apply similar or identical holding force values to the laboratory sample container 130.

Moreover, the sample container carrier 140 comprises a magnetically active element 145 in form of a permanent magnet, as shown in Fig. 2 and 3. The magnetically active element 145 is adapted to interact with a magnetic field generated by a drive element 120, such that a driving force is applied to the sample container carrier 140. In detail the magnetically active element 145 is arranged within a cavity of the base body 149, in particular in a lower part of the base body 149. Thereby, the magnetically active element 145 is not translationally displaceable relative to the base body 149.

Further, the sample container carrier 140 comprises a sliding surface 111 at its underside. In detail the base body 149, in particular its lower part, comprises an annular-shaped sliding surface 111.

Besides, the base body 149 is formed by a plurality of parts. In the shown embodiment the parts are connected by latching connections.

Fig. 8 shows an inventive laboratory automation system 10. The laboratory automation system 10 comprises an inventive laboratory sample distribution system 100 and a number of laboratory stations 20, 25. The number of laboratory stations 20, 25 may comprise at least one pre-analytical, analytical and/or post-analytical station. In the shown embodiment the laboratory stations 20, 25 are arranged adjacent to the laboratory sample distribution system 100. Self-evidently, more than the two laboratory stations 20, 25 depicted in Fig. 8 may be comprised in the laboratory automation system 10.

The laboratory sample distribution system 100 comprises a number of sample container carriers 140 as described above. Self-evidently, more than the three sample container carriers 140 depicted in Fig. 8 may be comprised in the laboratory sample distribution system 100. Furthermore, the laboratory sample distribution system 100 comprises a transport plane 110, a number of drive elements 120 and a control device 125. The transport plane 110 is adapted to support the number of sample container carriers 140. The number of drive elements 120 is adapted to move the number of sample container carriers 140 on the transport plane 110. The control device 125 is configured to control the number of drive elements 120, such that the number of sample container carriers 140 moves on the transport plane along corresponding transport paths, in particular each of the sample container carriers 140 along an individual transport path simultaneously.

The laboratory sample distribution system 100 is adapted to distribute the number of sample container carriers 140 and/or the laboratory sample containers 130 between the laboratory stations 20, 25.

At least one of the laboratory stations 20, 25 may comprise or be a gripper station for inserting the laboratory sample container 130 to the sample container carrier 140 or for removing the laboratory sample container 130 from the sample container carrier 140.

In detail the number of drive elements 120 comprises a number of electro-magnetic actuators 121. The number of electro-magnetic actuators 121 is stationary arranged below the transport plane 110 and is adapted to generate a magnetic field to move the number of sample container carriers 140 on the transport plane 110. In the shown embodiment the electro-magnetic actuators 121 are implemented as solenoids having a solid ferromagnetic core. The electro-magnetic actuators 121 are quadratically arranged in a grid having rows and columns, in particular in a plane parallel to the transport plane 110. In each center of a quadrat formed by corresponding electro-magnetic actuators 121 no electro-magnetic actuator is arranged. In other words: in each second row in each second position there is no electro-magnetic actuator 120.

The magnetically active element 145 of a respective sample container carrier 140 is adapted to interact with the magnetic field generated by the number of electro-magnetic actuators 121, such that a magnetic driving force is applied to the sample container carrier 140.

The control device 125 is configured to control the number of electro-magnetic actuators 121, such that the number of sample container carriers 140 moves on the transport plane along corresponding transport paths.

In detail the electro-magnetic actuators 121 can be driven individually, in particular by the control device 125, in order to generate a magnetic field for each sample container carrier 140. The magnetic field can interact with the magnetically active device 145 of the sample container carriers 140. As a result of the interaction the magnetic driving force is applied to the sample container carrier 140. Hence, the sample container carriers 140 can be translationally moved in two dimensions x, y being perpendicular to each other on or over the transport plane 110. In the shown embodiment the sliding surface 111 of a respective sample container carrier 140 is adapted to be in contact with the transport plane 110 and enables performing movements, in particular slides, of the sample container carrier 140 on the transport plane 110.

Furthermore, the laboratory sample distribution system 100 comprises a number of Hall-sensors 141. The number of Hall-sensors 141 is arranged, such that a position of a respective sample container carrier 140 on the transport plane 110 can be detected. The control device 125 is functionally coupled to the Hall-sensors 141 for detecting the position of the sample container carrier 140. The control device 125 is adapted to control the electro-magnetic actuators 121 in response to the detected position.

As the shown and above discussed embodiments reveal, the invention provides a sample container carrier having improved holding properties than sample container carriers of the prior art. Further the invention provides a laboratory sample distribution system comprising such a sample container carrier and a laboratory automation system comprising such a laboratory sample distribution system.

## Claims

1. Sample container carrier (140) for holding a laboratory sample container (130) and for transporting the held laboratory sample container (130) in a laboratory sample distribution system (100), the sample container carrier (140) comprising:
- a first holding element (150),
- a second holding element (160),
- wherein the first holding element (150) and the second holding element (160) are translationally displaceable towards and/or away from each other for holding the laboratory sample container (130), and
- a coupler (170), wherein the coupler (170) is connected to the first holding element (150) and to the second holding element (160), such that the coupler (170) couples translational displacements of the first holding element (150) and the second holding element (160) with each other,
**characterized**
- **in that** the coupler (170) is rotationally moveable, such that the coupler (170) couples by its rotational movement the translational displacements of the first holding element (150) and the second holding element (160) with each other, and
- **in that** the coupler (170) comprises a lever (171), wherein the lever (171) is connected to the first holding element (150) and to the second holding element (160).

2. Sample container carrier (140) according to any one of the preceding claims,
- wherein the first holding element (150) and/or the second holding element (160) comprises a number of jaws (180) for holding the laboratory sample container (130).

3. Sample container carrier (140) according to claim 2,
- wherein the jaws (180) are distributed around a central axis (CA) in an equidistant and/or equiangular manner.

4. Sample container carrier (140) according to claim 2 or 3,
- wherein at least one of the number of jaws (180) comprises a corrugation (181) for holding the laboratory sample container (130).

5. Sample container carrier (140) according to any one of the preceding claims,
- wherein the first holding element (150) and/or the second holding element (160) comprise/s an insertion support (182), wherein the insertion support (182) is adapted to cooperate together with the laboratory sample container (130) to be held, such that the holding element (150, 160) comprising the insertion support (182) is translationally displaced, when the laboratory sample container (130) is inserted into the sample container carrier (140).

6. Sample container carrier (140) according to any one of the preceding claims, comprising:
- a retaining element (190) applying a force to the first holding element (150) and/or to the second holding element (160) and/or to the coupler (170), such that the first holding element (150) and the second holding element (160) are force-loaded towards each other for holding the laboratory sample container (130).

7. Sample container carrier (140) according to any one of the preceding claims, comprising:
- a number of guiding elements (200, 210), wherein the number of guiding elements (200, 210) is adapted to guide the translational displacement/s of the first holding element (150) and/or the second holding element (160).

8. Sample container carrier (140) according to claim 7,
- wherein the number of guiding elements (200, 210) comprises a number of rails (205, 215), wherein the number of rails (205, 215) is adapted to guide the translational displacement/s of the first holding element (150) and/or the second holding element (160).

9. Sample container carrier (140) according to claim 7 or 8,
- wherein the guiding elements (200, 210) are arranged parallel to each other and/or
- wherein the coupler (170) is arranged between the guiding elements (200, 210).

10. Sample container carrier (140) according to any one of the preceding claims, comprising:
- a magnetically active element (145), wherein the magnetically active element (145) is adapted to interact with a magnetic field generated by a drive element (120), such that a driving force is applied to the sample container carrier (140).

11. Laboratory sample distribution system (100), comprising:
- a number of sample container carriers (140) according to any one of the preceding claims,
- a transport plane (110), wherein the transport plane (110) is adapted to support the number of sample container carriers (140),
- a number of drive elements (120), wherein the number of drive elements (120) is adapted to move the number of sample container carriers (140) on the transport plane (110), and
- a control device (125), wherein the control device (125) is configured to control the number of drive elements (120), such that the number of sample container carriers (140) moves on the transport plane (110) along corresponding transport paths.

12. Laboratory sample distribution system (100) according to claim 11,
- wherein the number of drive elements (120) comprises a number of electro-magnetic actuators (121), wherein the number of electro-magnetic actuators (121) is stationary arranged below the transport plane (110) and is adapted to generate a magnetic field to move the number of sample container carriers (140) on the transport plane (110),
- wherein each of the number of sample container carriers (140) comprises a magnetically active element (145), wherein the magnetically active element (145) is adapted to interact with the magnetic field generated by the number of electro-magnetic actuators (121), such that a driving force is applied to the sample container carrier (140), and
- wherein the control device (125) is configured to control the number of electro-magnetic actuators (121), such that the number of sample container carriers (140) moves on the transport plane (110) along corresponding transport paths.

13. Laboratory automation system (10), comprising:
- a number of laboratory stations (20, 25), and
- a laboratory sample distribution system (100) according to claim 11 or 12, wherein the laboratory sample distribution system (100) is adapted to distribute the number of sample container carriers (140) and/or laboratory sample containers (130) between the laboratory stations (20, 25).

## Patentansprüche

1. Probenbehälterträger (140) zum Halten eines Laborprobenbehälters (130) und zum Transportieren des gehaltenen Laborprobenbehälters (130) in einem Laborprobenverteilungssystem (100), wobei der Probenbehälterträger (140) Folgendes umfasst:
- ein erstes Halteelement (150),
- ein zweites Halteelement (160),
- wobei das erste Halteelement (150) und das zweite Halteelement (160) translatorisch zueinander und/oder voneinander weg verschoben werden können, um den Laborprobenbehälter (130) zu halten, und
- einen Koppler (170), wobei der Koppler (170) mit dem ersten Halteelement (150) und mit dem zweiten Halteelement (160) verbunden ist, so dass der Koppler (170) translatorische Verschiebungen des ersten Halteelements (150) und des zweiten Halteelements (160) miteinander koppelt,
**dadurch gekennzeichnet,**
- **dass** der Koppler (170) rotatorisch beweglich ist, so dass der Koppler (170) durch seine rotatorische Bewegung die translatorischen Verschiebungen des ersten Halteelements (150) und des zweiten Halteelements (160) miteinander koppelt, und
- **dass** der Koppler (170) einen Hebel (171) umfasst, wobei der Hebel (171) mit dem ersten Halteelement (150) und mit dem zweiten Halteelement (160) verbunden ist.

2. Probenbehälterträger (140) nach einem der vorstehenden Ansprüche,
- wobei das erste Halteelement (150) und/oder das zweite Halteelement (160) mehrere Klemmbacken (180) zum Halten des Laborprobenbehälters (130) umfasst.

3. Probenbehälterträger (140) nach Anspruch 2,
- wobei die Klemmbacken (180) abstandsgleich und/oder gleichwinklig um eine Mittelachse (CA) verteilt sind.

4. Probenbehälterträger (140) nach Anspruch 2 oder 3,
- wobei mindestens eine der mehreren Klemmbacken (180) eine Riffelung (181) zum Halten des Laborprobenbehälters (130) umfasst.

5. Probenbehälterträger (140) nach einem der vorstehenden Ansprüche,
- wobei das erste Halteelement (150) und/oder das zweite Halteelement (160) eine Einführhilfe (182) umfassen/umfasst, wobei die Einführhilfe (182) dafür ausgelegt ist, mit dem zu haltenden Laborprobenbehälter (130) zu kooperieren, so dass das Halteelement (150, 160), das die Einführhilfe (182) umfasst, translatorisch verschoben wird, wenn der Laborprobenbehälter (130) in den Probenbehälterträger (140) eingeführt wird.

6. Probenbehälterträger (140) nach einem der vorstehenden Ansprüche, umfassend:
- ein Rückhalteelement (190), das eine Kraft auf das erste Halteelement (150) und/oder auf das zweite Halteelement (160) und/oder auf den Koppler (170) ausübt, so dass das erste Halteelement (150) und das zweite Halteelement (160) zum Halten des Laborprobenbehälters (130) zueinander hin kraftbeaufschlagt werden.

7. Probenbehälterträger (140) nach einem der vorstehenden Ansprüche, umfassend:
- mehrere Führungselemente (200, 210), wobei die mehreren Führungselemente (200, 210) dafür ausgelegt sind, die translatorische(n) Verschiebung(en) des ersten Halteelements (150) und/oder des zweiten Halteelements (160) zu führen.

8. Probenbehälterträger (140) nach Anspruch 7,
- wobei die mehreren Führungselemente (200, 210) mehrere Schienen (205, 215) umfassen, wobei die mehreren Schienen (205, 215) dafür ausgelegt sind, die translatorische(n) Verschiebung(en) des ersten Halteelements (150) und/oder des zweiten Halteelements (160) zu führen.

9. Probenbehälterträger (140) nach Anspruch 7 oder 8,
- wobei die Führungselemente (200, 210) parallel zueinander angeordnet sind und/oder
- wobei der Koppler (170) zwischen den Führungselementen (200, 210) angeordnet ist.

10. Probenbehälterträger (140) nach einem der vorstehenden Ansprüche, umfassend:
- ein magnetisch wirkendes Element (145), wobei das magnetisch wirkende Element (145) dafür ausgelegt ist, mit einem Magnetfeld, das von einem Antriebselement (120) erzeugt wird, zu interagieren, so dass eine Antriebskraft auf den Probenbehälterträger (140) ausgeübt wird.

11. Laborprobenverteilungssystem (100), umfassend:
- mehrere Probenbehälterträger (140) nach einem der vorstehenden Ansprüche,
- eine Transportebene (110), wobei die Transportebene (110) dafür ausgelegt ist, die mehreren Probenbehälterträger (140) zu stützen,
- mehrere Antriebselemente (120), wobei die mehreren Antriebselemente (120) dafür ausgelegt sind, die mehreren Probenbehälterträger (140) auf der Transportebene (110) zu bewegen, und
- eine Steuerungsvorrichtung (125), wobei die Steuerungsvorrichtung (125) dafür ausgebildet ist, die mehreren Antriebselemente (120) zu steuern, so dass sich die mehreren Probenbehälterträger (140) auf der Transportebene (110) entlang entsprechender Transportwege bewegen.

12. Laborprobenverteilungssystem (100) nach Anspruch 11,
- wobei die mehreren Antriebselemente (120) mehrere elektromagnetische Aktuatoren (121) umfassen, wobei die mehreren elektromagnetischen Aktuatoren (121) stationär unter der Transportebene (110) angeordnet sind und dafür ausgelegt sind, ein Magnetfeld zu erzeugen, um die mehreren Probenbehälterträger (140) auf der Transportebene (110) zu bewegen,
- wobei jeder der mehreren Probenbehälterträger (140) ein magnetisch wirkendes Element (145) umfasst, wobei das magnetisch wirkende Element (145) dafür ausgelegt ist, mit dem Magnetfeld, das von den mehreren elektromagnetischen Aktuatoren (121) erzeugt wird, zu interagieren, so dass eine Antriebskraft auf den Probenbehälterträger (140) ausgeübt wird, und
- wobei die Steuerungsvorrichtung (125) dafür ausgebildet ist, die mehreren elektromagnetischen Aktuatoren (121) zu steuern, so dass sich die mehreren Probenbehälterträger (140) auf der Transportebene (110) entlang entsprechender Transportwege bewegen.

13. Laborautomatisierungssystem (10), umfassend:
- mehrere Laborstationen (20, 25) und
- ein Laborprobenverteilungssystem (100) nach Anspruch 11 oder 12, wobei das Laborprobenverteilungssystem (100) dafür ausgelegt ist, die mehreren Probenbehälterträger (140) und/oder Laborprobenbehälter (130) zwischen den Laborstationen (20, 25) zu verteilen.

## Revendications

1. Support de récipient d'échantillon (140) pour maintenir un récipient d'échantillon de laboratoire (130) et transporter le récipient d'échantillon de laboratoire (130) maintenu dans un système de distribution d'échantillons de laboratoire (100), le support de récipient d'échantillon (140) comprenant :
- un premier élément de maintien (150),
- un second élément de maintien (160),
- dans lequel le premier élément de maintien (150) et le second élément de maintien (160) peuvent être déplacés en translation en se rapprochant l'un de l'autre et/ou en s'éloignant l'un de l'autre pour maintenir le récipient d'échantillon de laboratoire (130), et
- un coupleur (170), dans lequel le coupleur (170) est relié au premier élément de maintien (150) et au second élément de maintien (160), de sorte que le coupleur (170) accouple des déplacements en translation du premier élément de maintien (150) et du second élément de maintien (160) l'un avec l'autre,
**caractérisé**
- **en ce que** le coupleur (170) est déplaçable en rotation, de sorte que le coupleur (170) accouple par son mouvement de rotation les déplacements en translation du premier élément de maintien (150) et du second élément de maintien (160) l'un avec l'autre, et
- **en ce que** le coupleur (170) comprend un levier (171), dans lequel le levier (171) est relié au premier élément de maintien (150) et au second élément de maintien (160).

2. Support de récipient d'échantillon (140) selon l'une quelconque des revendications précédentes,
- dans lequel le premier élément de maintien (150) et/ou le second élément de maintien (160) comprend un certain nombre de mâchoires (180) pour maintenir le récipient d'échantillon de laboratoire (130).

3. Support de récipient d'échantillon (140) selon la revendication 2,
- dans lequel les mâchoires (180) sont réparties autour d'un axe central (CA) de manière équidistante et/ou équiangle.

4. Support de récipient d'échantillon (140) selon la revendication 2 ou 3,
- dans lequel au moins une du certain nombre de mâchoires (180) comprend une ondulation (181) pour maintenir le récipient d'échantillon de laboratoire (130).

5. Support de récipient d'échantillon (140) selon l'une quelconque des revendications précédentes,
- dans lequel le premier élément de maintien (150) et/ou le second élément de maintien (160) comprend/comprennent un support d'insertion (182), dans lequel le support d'insertion (182) est conçu pour coopérer conjointement avec le récipient d'échantillon de laboratoire (130) à maintenir, de sorte que l'élément de maintien (150, 160) comprenant le support d'insertion (182) est déplacé en translation, quand le récipient d'échantillon de laboratoire (130) est inséré dans le support de récipient d'échantillon (140).

6. Support de récipient d'échantillon (140) selon l'une quelconque des revendications précédentes, comprenant :
- un élément de retenue (190) appliquant une force au premier élément de maintien (150) et/ou au second élément de maintien (160) et/ou au coupleur (170), de sorte que le premier élément de maintien (150) et le second élément de maintien (160) sont chargés en force en se rapprochant l'un de l'autre pour maintenir le récipient d'échantillon de laboratoire (130).

7. Support de récipient d'échantillon (140) selon l'une quelconque des revendications précédentes, comprenant :
- un certain nombre d'éléments de guidage (200, 210), dans lequel le certain nombre d'éléments de guidage (200, 210) est conçu pour guider le ou les déplacements en translation du premier élément de maintien (150) et/ou du second élément de maintien (160).

8. Support de récipient d'échantillon (140) selon la revendication 7,
- dans lequel le certain nombre d'éléments de guidage (200, 210) comprend un certain nombre de rails (205, 215), dans lequel le certain nombre de rails (205, 215) est conçu pour guider le ou les déplacements en translation du premier élément de maintien (150) et/ou du second élément de maintien (160).

9. Support de récipient d'échantillon (140) selon la revendication 7 ou 8,
- dans lequel les éléments de guidage (200, 210) sont disposés parallèlement l'un à l'autre et/ou
- dans lequel le coupleur (170) est disposé entre les éléments de guidage (200, 210).

10. Support de récipient d'échantillon (140) selon l'une quelconque des revendications précédentes, comprenant :
- un élément magnétiquement actif (145), dans lequel l'élément magnétiquement actif (145) est conçu pour interagir avec un champ magnétique généré par un élément d'entraînement (120), de sorte qu'une force d'entraînement est appliquée au support de récipient d'échantillon (140).

11. Système de distribution d'échantillons de laboratoire (100), comprenant :
- un certain nombre de supports de récipient d'échantillon (140) selon l'une quelconque des revendications précédentes,
- un plan de transport (110), dans lequel le plan de transport (110) est conçu pour soutenir le certain nombre de supports de récipient d'échantillon (140),
- un certain nombre d'éléments d'entraînement (120), dans lequel le certain nombre d'éléments d'entraînement (120) est conçu pour déplacer le certain nombre de supports de récipient d'échantillon (140) sur le plan de transport (110), et
- un dispositif de commande (125), dans lequel le dispositif de commande (125) est configuré pour commander le certain nombre d'éléments d'entraînement (120), de sorte que le certain nombre de supports de récipient d'échantillon (140) se déplace sur le plan de transport (110) le long des trajets de transport correspondants.

12. Système de distribution d'échantillons de laboratoire (100) selon la revendication 11,
- dans lequel le certain nombre d'éléments d'entraînement (120) comprend un certain nombre d'actionneurs électromagnétiques (121), dans lequel le certain nombre d'actionneurs électromagnétiques (121) est disposé de manière stationnaire sous le plan de transport (110) et est conçu pour générer un champ magnétique pour déplacer le certain nombre de supports de récipient d'échantillon (140) sur le plan de transport (110),
- dans lequel chacun du certain nombre de supports de récipient d'échantillon (140) comprend un élément magnétiquement actif (145), dans lequel l'élément magnétiquement actif (145) est conçu pour interagir avec le champ magnétique généré par le certain nombre d'actionneurs électromagnétiques (121), de sorte qu'une force d'entraînement est appliquée au support de récipient d'échantillon (140), et
- dans lequel le dispositif de commande (125) est configuré pour commander le certain nombre d'actionneurs électromagnétiques (121), de sorte que le certain nombre de supports de récipient d'échantillon (140) se déplace sur le plan de transport (110) le long des trajets de transport correspondants.

13. Système d'automatisation de laboratoire (10), comprenant :
- un certain nombre de stations de laboratoire (20, 25), et
- un système de distribution d'échantillons de laboratoire (100) selon la revendication 11 ou 12, dans lequel le système de distribution d'échantillons de laboratoire (100) est conçu pour distribuer le certain nombre de supports de récipient d'échantillon (140) et/ou récipients d'échantillon de laboratoire (130) entre les stations de laboratoire (20, 25).
